# EUROPEAN PATENT APPLICATION

(11) **EP 1 649 913 A1**
(43) Date of publication of application: **26.04.2006**
(21) Application number: 05022992.1
(22) Date of filing: 21.10.2005
(51) Int. Cl.: B01D 29/23, B23Q 11/10

(54) **Apparatus for removing the sludge from a tank for collecting the refrigerating liquid of a machine tool**

(30) Priority: 22.10.2004 IT BO20040655
(71) Applicant: Due Effe S.p.A., 40057 Cadriano BO (IT)
(72) Inventor: Fierro, Antonio, 40068 S. Lazzaro Di Savena (Bologna) (IT); Giannasi, William, 40127 Bologna (IT)
(74) Representative: Dall'Olio, Giancarlo

(57) **Abstract**

The present apparatus (1) for removing the sludge from a collecting tank (4) of the refrigerating liquid in a machine tool (100) comprises: sucking means (2), fit to suck said refrigerating liquid from the collecting tank (4), together with the sludge which has sedimented on its bottom; sack filtering means (5), having a pre-defined porousness, fit to retain the sludge and to allow the refrigerating liquid to pass through the sack walls, for conveying the same liquid toward the collecting tank (4); a sucking pipe (3), whose ends are respectively connected to said sucking means (2) and to said sack filtering means (5).

## Description

The present invention relates to an apparatus for the treatment of tailings produced by a machine tool.

More specifically, the invention relates to an apparatus for removing the sludge that sediments in a tank which collects the refrigerating and/or lubricating liquid of a machine tool.

It is known that the machine tools are generally provided with a tool refrigerating and lubricating system, which comprises a series of pipes, at least one thereof ends near the operating tool and sprinkles this latter with a suitable refrigerating liquid product.

This operation moreover allows the material being removed from the machined piece to be carried away by the same liquid product.

The refrigerating liquid product, together with the machining residuals which stay in suspension therein, are then filtered by means of a metallic grid, that is usually placed at the upper rim of a collecting tank This latter is generally installed in the lower part of the machine tool. Subsequently, the refrigerating liquid product and those machining residuals which have not been retained by the metallic grid fall into the same collecting tank.

The above operating modes have some substantial drawbacks, which arise when the machining residuals have to be removed from the collecting tank. In fact, those residuals tend to deposit on the tank bottom, thus forming a sort of dense and heavy sludge thereon.

In order to remove said sludge from the tank bottom, at present all the refrigerating liquid must be removed from the collecting tank, and then an operator has to pick up the sludge by means of a hands-operated tool, as a shovel or similar tool.

It is moreover known that the machine tools are generally provided with on-line filters, through which the refrigerating liquid continuously flows, in order to remove the solid wastes contained therein.

The filters which are commonly used for the refrigerating liquid filtration do not allow the thin machining powder to be removed. Said powder remains in suspension in the refrigerating liquid, and make it unusable very quickly.

This drawback leads to a frequent substitution of the whole refrigerating liquid in the machine tool, which results in increased operating costs.

The above explained operation of removing and treating sludge from the collecting tank bottom require a considerable amount of time, up to several hours, as the sludge has to be collected by hand by an operator after the refrigerating liquid has been removed. During the cleaning operation the machine tool must be stopped or turned off, and this results in a considerable reduction of the machine tool productivity.

Moreover, the operator which carries out the cleaning operation must often work staying inside the collecting tank, thus being subject to dirty himself and his clothes, in a very dirty and unhealthy environment.

It has to be pointed out that even the sludge treatment phases, subsequent to the collecting one, are time wasting and tiring as well, as the removed sludge has to be placed into suitable containers, and hold therein until they become substantially dry.

It is an object of the present invention to provide an apparatus for removing sludge from a tank for collecting the refrigerating liquid in a machine tool, which guarantees an effective and quick sludge removing action, without stopping or turning off the same machine tool.

A further object of the present invention is to provide an apparatus which allows the sludge to be removed from the collecting tank bottom in an automatic and unattended way, that is with no operator working with tools or simply looking at the operation.

Another object of the present invention is to provide an apparatus which is easy to use, of simple and reliable construction, cheap to buy and to operate, and also able to be installed and maintained very quickly.

The aforementioned objects are attained according to the contents of the appended claims. The most important characteristic features of the present invention will be pointed out in the following, by means of disclosing some preferred, but not exclusive embodiments of the same invention, with reference to the enclosed drawing tables wherein:
- figure 1 shows a schematic front view of the sludge removing apparatus according to a preferred embodiment thereof;
- figure 2 shows a schematic side view of the same sludge removing apparatus. With reference to the aforesaid figures, numeral 1 indicates an apparatus for removing sludge from a collecting tank 4 for the refrigerating liquid in a machine tool 100, according to a preferred embodiment of the present invention.

The sludge removing apparatus 1 is provided with a pump 2, whose upstream inlet is connected to one end of a pipe 9. The opposite pipe end plunges into the collecting tank 4, near the tank bottom. The pump 2 is fit to suck refrigerating liquid from the tank bottom, together with sludge which has sedimented on the tank bottom.

Downstream of the pump 2 there is provided a collecting sack 5, whose upper end is connected to the pump 2 outlet by means of a sucking pipe 3.

The collecting sack 5 is preferably made with a material having a pre-defined porousness, or with a suitably closely-woven tissue.

Said sack 5 is fit to retain the sludge, while at the same time allowing the refrigerating liquid to pass through its walls.

The sack filter 5 is arranged into a first tubular member 6 having a cylindrical shape, whose side surface has a grid structure, fit to support the outer side of sack 5 while allowing the refrigerating liquid to flow away.

The first tubular member 6 is made by a pair of half shells 61,62 hinged one each other, for allowing their book-like opening.

More generally, the side face of said half shells 61,62 can be provided with a plurality of openings, fit to allow the refrigerating liquid coming out of the filter sack 5 to flow away from the same tubular members. Half shells 61,62 are shaped so as to define at their top, once coupled together, an opening fit to allow the sucking pipe 3 to pass through it.

As already explained, one end of this sucking pipe 3 is tightly connected to the upper end of the sack filter 5, just under the aforesaid upper opening of the tubular member 6.

The half shells 61,62, once coupled one each other, define an inner chamber whose volume is conveniently smaller than the maximum volume of the filter sack 5. This prevents the filter sack 5 from expanding above a pre-defined limit, over that it could break and disperse the collected sludge.

In the preferred embodiment of apparatus 1, the first tubular element 6 is contained inside a second, watertight tubular member 7. This latter has also a cylindrical shape and has a closed bottom 7A and an openable top 7B, which allows the first tubular member 6 to be inserted into the second tubular member 7.

The second tubular member 7 is provided with an exhaust outlet 8, by means of which the filtered refrigerating liquid is conveyed, directly or by means of an exhaust pipe 8A, to the collecting tank 4. Preferably, the exhaust outlet 8 is made in the side face of the second tubular member 7, close to its bottom 7A. Nevertheless, it can also be provided directly in the same bottom 7A.

A different embodiment of the sludge removing apparatus 1 does not comprise the second tubular member 7; in this case, the filtered refrigerating liquid coming out from the first tubular member 6 goes directly to the collecting tank 4. Of course, the sludge removing apparatus 1 according to this different embodiment has to be mounted just over the collecting tank 4.

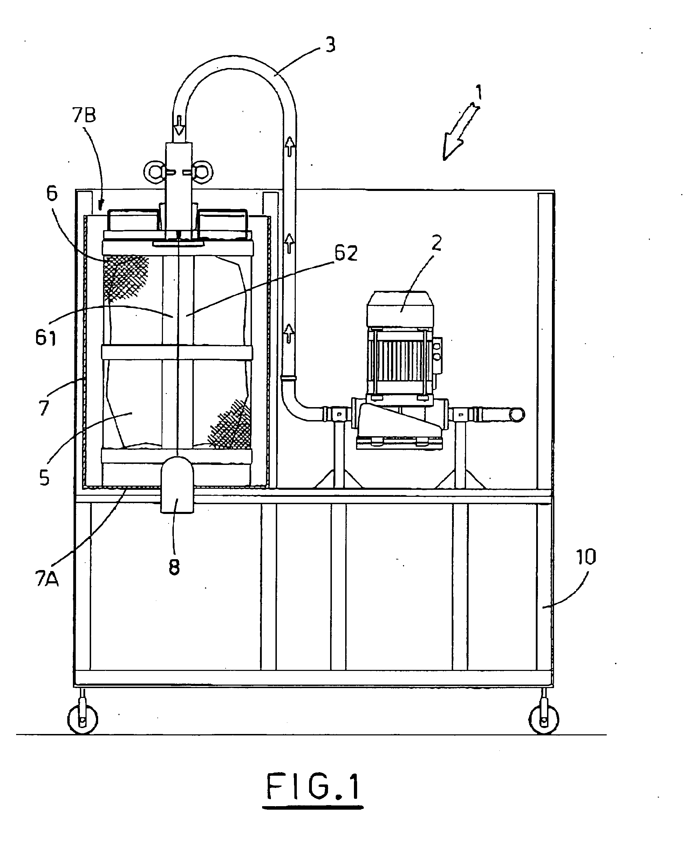

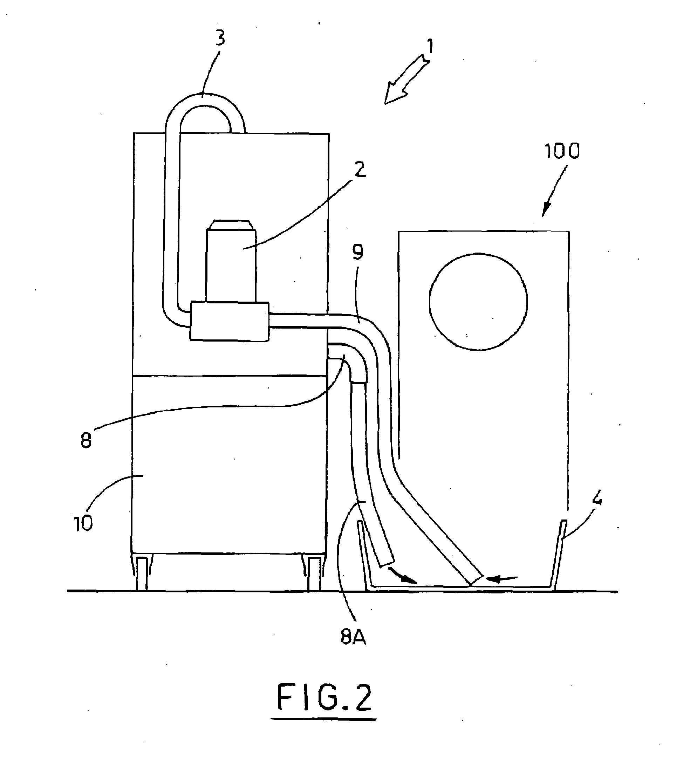

Generally the sludge removing apparatus 1 can be statically mounted on the machine tool 100, or it can be mounted on a cart 10 (see figures 1,2), so as to be easily moved and shared among several machine tools.

The operating modes of the present sludge removing apparatus 1 will be now described, although it would be easily arguable by any skilled person.

The pump 2 collects the sludge which have sedimented on the tank 4 bottom, together with the refrigerating liquid, by means of the pipe 9, and then it pushes the same sludge and refrigerating liquid toward the filter sack 5 by means of the sucking pipe 3.

The porousness of said filter sack 5 is suitably chosen according to the minimum size of the metallic particles which form the sludge. In this way the sludge is retained inside the filter sack 5, while the refrigerating liquid, now cleaned of its particles in suspension, flows out of the walls of the same filter sack 5 and is conveyed into the collecting tank 4 by means of the exhaust outlet 8 and the exhaust pipe 8A. The filtered refrigerating liquid is then ready to operate again in the machine tool refrigerating circuit.

Advantageously, the present sludge removing apparatus 100 guarantees an effective and fast removal of sludge from the collecting tank of a machine tool, without stopping or turning off the same machine tool.

Moreover, the present sludge removing apparatus allows the sludge in the collecting tank is removed automatically and in an unattended way, i.e. with no intervention by an operator. This latter is moreover prevented from being subject to dirty himself and his clothes, and from working in a very dirty and unhealthy environment.

Advantageously, the present sludge removing apparatus, as it continuously removes all the tailings produced during the machining operations and being present in suspension in the refrigerating liquid, also prevents the early pollution thereof.

From the above considerations it seems evident that the present sludge removing apparatus, being composed by a few components, features low manufacturing costs and it is easily and quickly installable on several kinds of machine tools.

For the same reason, even the maintaining operation require a reasonable amount of time.

The so structured sludge removing apparatus, comprising the above described filter sack, allows the sludge, once removed from the collecting tank, to be dried and subsequently carried away in an easy and clean way.

The present invention has been described, with reference to the accompanying drawings, by a way of a non limiting example. It is therefore evident that all the variants and modification made to the sludge removing apparatus will fall within the scopes of the present invention, as they are comprised in the following claims.

## Claims

1. Apparatus for removing the sludge from a tank for collecting the refrigerating liquid in a machine tool (100), **characterized in that** it comprises: sucking means (2) fit to suck refrigerating liquid from said collecting tank (4), together with the sludge that has sedimented on the bottom thereof; sack filterimg means (5), having a pre-defined porousness, fit to retain said sludge and to allow the same refrigerating liquid to pass through its walls, in order to convey the filtered refrigerating liquid toward said collecting tank (4); at least a sucking pipe (3), connected to said sucking means (2) by one of its ends, and also connected to said sack filtering means (5) by its opposite end.

2. Apparatus according to claim 1, **characterized in that** it comprises supporting means (6), fit to support said sack filtering means (5) by receiving this latter inside it, for preventing said sack filtering means (5) from expanding above a pre-defined limit.

3. Apparatus according to claim 2, **characterized in that** said supporting means (6) comprises a first tubular member, having a grid structure for at leas a lower portion of its side face, fit to receive said sack filtering means (5) and to release the refrigerating liquid filtered thereof.

4. Apparatus according to any one of claims 1 to 3, **characterized in that** it comprises a second tubular member (7), having a closed bottom (7A) and an openable top (7B) fit to allow said first tubular member (6) to be inserted into said second tubular member (7).

5. Apparatus according to claim 4, **characterized in that** said second tubular member (7) is provided with exhaust means (8), fit to convey said refrigerating liquid into said collecting tank (4).

6. Apparatus according to any one of claims 2 or 3, **characterized in that** said supporting means (6) have a volume not greater than the maximum allowed volume of said sack filtering means (5).

7. Apparatus according to claims 3, **characterized in that** said first tubular member (6) is made of one single piece.

8. Apparatus according to claim 3, **characterized in that** said first tubular member (6) is made by a pair of half-shells (61,62) coupled one each other.

9. Apparatus according to claim 8, **characterized in that** said half-shells (61,62) are hinged together, in order to allow a book-like opening and closing.

10. Apparatus according to claim 1, **characterized in that** it provides an input pipe (9), fit to put into liquid communication said collecting tank (4) and said sucking means (2).

11. Apparatus according to any one of the preceeding claims, **characterized in that** it is mounted on a cart (10), fit to allow said apparatus (1) to be easily transported from one machine tool (100) to another one.

12. Apparatus according to any one of the preceeding claims, **characterized in that** it is fixed to said machine tool (100).
